# EUROPÄISCHE PATENTSCHRIFT

(11) **EP 3 770 708 B1**
(45) Veröffentlichungstag und Bekanntmachung des Hinweises auf die Patenterteilung: **12.07.2023**
(21) Anmeldenummer: 19188184.6
(22) Anmeldetag: 24.07.2019
(51) Int. Cl.: G05B 19/418, G05B 9/02

(54) **ÜBERWACHUNGSVORRICHTUNG**
MONITORING DEVICE
DISPOSITIF DE SURVEILLANCE

(43) Veröffentlichungstag der Anmeldung: 27.01.2021
(73) Patentinhaber: Leuze electronic GmbH + Co. KG, 73277 Owen/Teck (DE)
(72) Erfinder: Polo, Francisco, 08640 Olesa de Montserrat (Barcelona) (ES); Gallastegui, Inaki, 08348 Cabrils (Barcelona) (ES); Moratal, Marc, 08940 Cornella de Llobregat (Barcelona) (ES)
(74) Vertreter: Ruckh, Rainer Gerhard

(56) Entgegenhaltungen:
- EP-A1- 3 373 093
- EP-A2- 1 443 343
- EP-A2- 1 936 406
- DE-A1-102015 220 495
- DE-A1-102016 107 564
- DE-A1-102017 123 295

## Beschreibung

Die Erfindung betrifft eine Überwachungsvorrichtung.

Bekannte Überwachungsvorrichtungen werden zur Gefahrenbereichsüberwachung an Fahrzeugen eingesetzt, die insbesondere als fahrerlose Transportsysteme oder allgemein als autonome, das heißt autonom fahrende Fahrzeuge, ausgebildet sein können. Typischerweise ist an der Frontseite als Bestandteil der Überwachungsvorrichtung ein Sensor angeordnet, mittels dessen das Vorfeld des Fahrzeugs als Gefahrenbereich überwacht wird um Kollisionen ausschließen zu können. Ein hierfür besonders geeigneter Sensor ist ein optischer Sensor in Form eines Flächendistanzsensors, das heißt eines scannenden Distanzsensors.

Mit einem solchen Flächendistanzsensor wird innerhalb eines an den Gefahrenbereich angepassten Schutzfelds eine Objektdetektion durchgeführt. Wird mit dem Flächendistanzsensor ein Objekt im Schutzfeld erkannt, wird mit dem Flächendistanzsensor ein Sicherheitssignal generiert, das an die Fahrzeugsteuerung des Fahrzeugs ausgegeben wird, wodurch das Fahrzeug angehalten wird und somit gefahrenbringende Kollisionen vermieden werden.

Auch ist es bekannt derartige Sensoren, insbesondere Flächendistanzsensoren, an einer stationären Maschine zur Gefahrenbereichsüberwachung einzusetzen. Die genannten Überwachungsvorrichtungen bilden voneinander völlig unabhängige Einheiten.

Die DE 10 2016 107 564 A1 betrifft eine Sicherheitseinrichtung und ein Sicherheitsverfahren für eine Fertigungsstation von Karosseriebauteilen und für ein in die Fertigungsstation einfahrendes und ausfahrendes Fördermittel für den Werkstücktransport in und aus der Fertigungsstation. Die Fertigungsstation und die Fördermittel weisen jeweils eine eigene Steuerung und einen eigenen Sicherheitskreis auf, wobei die Sicherheitseinrichtung die Sicherheitskreise der Fertigungsstation und des in der Fertigungsstation befindlichen Fördermittels verbindet. Die Sicherheitseinrichtung beeinflusst und verändert dabei einen Schutzbereich einer Schutzeinrichtung eines eigensicheren Fördermittels bei der Ein- und Ausfahrt und innerhalb der Fertigungsstation.

Die DE 10 2015 220 495 A1 betrifft Verfahren zum Betreiben eines Manipulatorsystems, welches insbesondere ein fahrerloses Transportsystem und ferner insbesondere ein fahrerloses Transportfahrzeug umfassen kann. Ein Schutzfeld des Manipulatorsystems wird dabei mittels einer Überwachungseinrichtung überwacht. Das Verfahren umfasst dabei ein Bereitstellen von Umgebungsinformation betreffend eine Umgebung des Manipulatorsystems und ein Anpassen des Schutzfeldes basierend auf der Umgebungsinformation.

Der Erfindung liegt die Aufgabe zugrunde, eine Überwachungsvorrichtung und ein Verfahren bereitzustellen, mittels derer eine flexible und sichere Gefahrenbereichsüberwachung ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungsvorrichtung mit Sensoren an einer stationären Einrichtung und mit Sensoren an einer mobilen Einrichtung. Zumindest ein Teil der Sensoren ist für eine Kommunikation zwischen der stationären Einrichtung und der mobilen Einrichtung ausgebildet. In Abhängigkeit von Sensorsignalen sind Überwachungsfunktionalitäten ereignisgesteuert vorgegeben. Sensoren sind Kommunikationsmodule zugeordnet, über welche Informationen zur Vorgabe von Überwachungsfunktionalitäten übertragbar sind. Über Kommunikationsmodule tauschen Sensoren direkt Informationen aus. Alternativ oder zusätzlich weist die stationäre Einrichtung und/oder die mobile Einrichtung eine Steuereinheit mit einem zugeordneten Kommunikationsmodul zum Austausch von Informationen untereinander und/oder mit Sensoren auf. In Sensoren generierte Überwachungssignale werden zur Inter-Sensor-Kommunikation genutzt, wobei auf der stationären Einrichtung und der mobilen Einrichtung jeweils eine Sensoreinheit eines Sensors angeordnet ist, zwischen welchen Überwachungssignale übertragen werden, welche zur Inter-Sensor-Kommunikation genutzt werden.

Der Grundgedanke der Erfindung besteht somit darin, Sensoren nicht für Objektdetektionen einzusetzen, sondern auch für eine ereignisgesteuerte Festlegung von Überwachungsfunktionalitäten. Damit kann eine selbsttätige Anpassung von Überwachungsfunktionalitäten an sich verändernde Randbedingungen, insbesondere der Zustände der beiden Einrichtungen erfolgen, wodurch die Funktionalität der Überwachungsvorrichtung wesentlich erhöht ist.

Insbesondere kann mit der erfindungsgemäßen Inter-Sensor-Kommunikation und der daraus resultierenden ereignisgesteuerten Vorgabe der Überwachungsfunktionalitäten eine vollständige und sichere Überwachung sowohl der stationären Einrichtung als auch der mobilen Einrichtung erfolgen und zwar abhängig von deren Betriebsweisen und Betriebszuständen. Insbesondere ist mit der erfindungsgemäßen Überwachungsvorrichtung stets ein gefordertes Sicherheitsniveau bei der Durchführung von Überwachungen zu erfüllen.

Erfindungsgemäß sind Sensoren Kommunikationsmodule zugeordnet, über welche Informationen zur Vorgabe von Überwachungsfunktionalitäten übertragbar sind.

Vorteilhaft erfolgt zwischen zwei Kommunikationsmodule ein bidirektionaler Datenaustausch.

Gemäß einer ersten Variante tauschen über Kommunikationsmodule Sensoren direkt Informationen aus.

Damit wird ein völlig dezentrales System geschaffen, bei welchem nur die Sensoren die Inter-Sensor-Kommunikation durch einen direkten Informationsaustausch durchführen, sodass keinerlei übergeordnete Einheiten vorgesehen werden müssen.

Erfindungsgemäß werden in Sensoren generierte Überwachungssignale zur Inter-Sensor-Kommunikation genutzt.

In diesem Fall sind nicht einmal Kommunikationsmodule zum Informationsaustausch zwischen Sensoren erforderlich, da hierzu die von den Sensoren zur Durchführung von Objektdetektion generierten Überwachungssignale genutzt werden.

Erfindungsgemäß ist auf der stationären Einrichtung und der mobilen Einrichtung jeweils eine Sensoreinheit eines Sensors angeordnet, zwischen welchen Überwachungssignale übertragen werden, welche zur Inter-Sensor-Kommunikation genutzt werden.

Gemäß einer weiteren Variante weist die stationäre Einrichtung und/oder die mobile Einrichtung eine Steuereinheit mit einem zugeordneten Kommunikationsmodul zum Austausch von Informationen untereinander und/oder mit Sensoren auf.

Alternativ ist auch eine leitungsgebundene Datenübertragung zwischen den Steuereinheiten und den auf der jeweiligen Einrichtung vorgesehenen Sensoren möglich.

Die Steuereinheiten können übergeordnete Einheiten zu den Sensoren bilden, indem Sensorsignale mehrerer Sensoren in einer Steuereinheit gesammelt, ausgewertet und gegebenenfalls weitergegeben werden. Alternativ können die Steuereinheiten mit den Sensoren ein dezentrales, nicht hierarchisches System ausbilden.

Besonders vorteilhaft wird mit der erfindungsgemäßen Überwachungsvorrichtung eine ereignisgesteuerte Gefahrenbereichsüberwachung durchgeführt.

Der oder die mit der Überwachungsvorrichtung abzusichernden Gefahrenbereiche werden durch die Inter-Sensor-Kommunikation selbsttätig an die jeweilige Situation der Einrichtungen angepasst, sodass die Gefahrenbereiche vollständig und mit dem erforderlichen Sicherheitsniveau abgesichert sind.

Gemäß einer vorteilhaften Ausgestaltung der Erfindung sind Sensoren für eine Schutzfeldüberwachung ausgebildet.

In diesem Fall sind ereignisgesteuert unterschiedliche Schutzfelder für Sensoren vorgegeben.

Beispielsweise können für eine Anzahl von Situationen in den jeweiligen Sensoren mehrere Schutzfelder abgespeichert sein, sodass aus diesen eine Auswahl erfolgen kann. Alternativ können auch Schutzfelder von externen Einheiten in die Sensoren eingelesen werden.

Ein genereller Vorteil der Erfindung besteht darin, dass keine feste zentrale Einheit vorgesehen ist, welche die Sicherheitsfunktion der Überwachungsvorrichtung fest vorgibt. Vielmehr wird in dem dezentralen System abhängig von der aktuellen Inter-Sensor-Kommunikation entschieden, welche Überwachungsfunktionalität realisiert wird. Das so gebildete verteilte System kann flexibel auf sich ändernde Konfigurationen reagieren.

Zur Erfüllung der normativen Anforderungen für einen Einsatz im Bereich der Sicherheitstechnik, insbesondere im Bereich des Personenschutzes, bilden die Steuereinheiten der Einrichtungen, die Sensoren und die von den Kommunikationsmodulen gebildeten Kommunikationseinrichtungen sicherheitsgerichtete Einheiten aus, das heißt, dass die Steuereinheiten als Sicherheitssteuerungen und die Sensoren als Sicherheitssensoren ausgebildet sind.

Die Steuereinheiten und die Sensoren können hierzu einen fehlersicheren, insbesondere redundanten, zweikanaligen Aufbau aufweisen. Die Kommunikationseinrichtung kann eine fehlersichere Datenübertragung durch eine Absicherung mit Prüfsummen oder dergleichen gewährleisten. Die Kommunikationseinrichtung kann beispielsweise derart ausgebildet sein, dass mit dieser bidirektional Funksignale übertragen werden. Generell können die Kommunikationsmodule leitungsgebunden oder berührungslos arbeitende Kommunikationseinrichtungen ausbilden.

Vorteilhaft sind ein oder mehrere Sensoren optische Sensoren oder Radarsensoren, welche zur Erfassung von Objekten innerhalb zwei- und/oder dreidimensionaler Schutzfelder ausgebildet sind.

Insbesondere kann ein optischer Sensor als ein Flächendistanzsensor oder ein Kamera-Sensor oder als Distanzsensor ausgebildet sein.

Weiterhin kann der optische Sensor auch einen Lichtvorhang oder eine Lichtschranke ausbilden.

Je nach Ausbildung der Sensoren sind die Schutzfelder ein-, zwei- oder dreidimensionale Bereiche.

So kann mit einem einfachen Distanzsensor oder einer Lichtschranke ein eindimensionaler Bereich als Schutzfeld überwacht werden, während mit Flächendistanzsensoren und Lichtvorhängen zweidimensionale Bereiche überwacht werden können. Mit Kamera-Sensoren können insbesondere dreidimensionale Bereiche als Schutzfelder überwacht werden.

Bei der stationären Einrichtung und der mobilen Einrichtung handelt es sich typischerweise um Einheiten, von denen Gefährdungen ausgehen können. Beispielsweise sind die Einrichtungen in Form von Maschinen, Anlagen, Roboterzellen, Fahrzeugen und/oder Gebäudeteilen gebildet.

Als Fahrzeuge können autonome Fahrzeuge, wie zum Beispiel fahrerlose Transportsysteme oder sonstige Transporteinrichtungen vorgesehen sein.

Die Erfindung wird im Folgenden anhand der Zeichnungen erläutert. Es zeigen:
- Figur 1:: Ausführungsbeispiel einer erfindungsgemäßen Überwachungsvorrichtung.
- Figur 2:: Flächendistanzsensor für die Überwachungsvorrichtung gemäß Figur 1.
- Figur 3:: Lichtvorhang für die Überwachungsvorrichtung gemäß Figur 1.
- Figur 4 - 18:: Unterschiedliche Phasen einer Gefahrenbereichsüberwachung für die Überwachungsvorrichtung gemäß Figur 1.

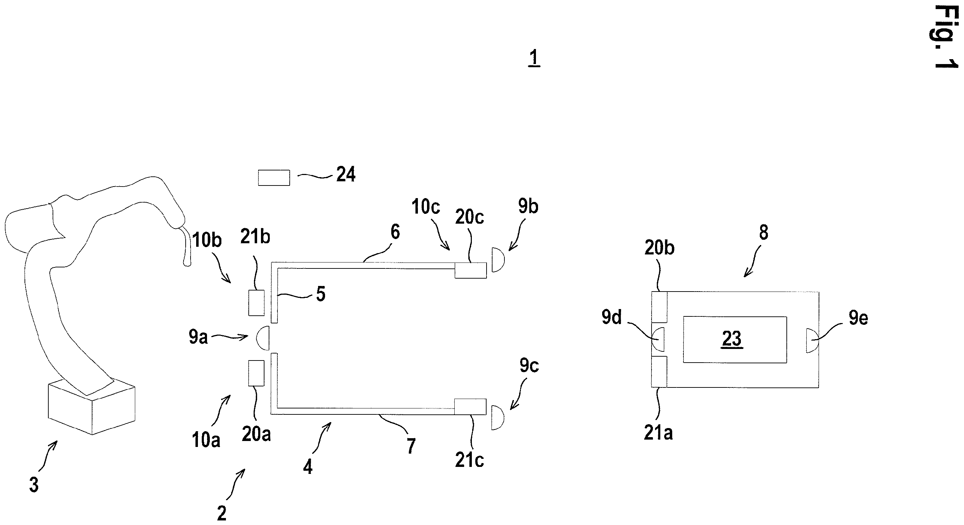

Figur 1 zeigt ein Ausführungsbeispiel der erfindungsgemäßen Überwachungsvorrichtung 1. Diese dient zur Absicherung von Gefahrenbereichen an einer eine stationäre Einrichtung bildenden Roboterzelle 2 und eine mobile Einrichtung in Form eines als fahrerloses Transportsystem 8 ausgebildeten autonomen Fahrzeugs.

Die Roboterzelle 2 umfasst einen Roboter 3 und eine dem Roboter 3 zugeordnete Zelle 4. Die Zelle 4 ist an der Rückseite mit einer Rückwand 5 und seitlich mit je einer Seitenwand 6, 7 abgeschlossen. Die Frontseite der Zelle 4 ist offen und bildet eine Einfahrt für das fahrerlose Transportsystem 8. Diese Wände sind senkrecht zu einem Boden orientiert, auf welchem das fahrerlose Transportsystem 8 fährt. Das fahrerlose Transportsystem 8 muss in die Zelle 4 eingefahren werden, um Material für den Roboter 3 anzuliefern.

Zur Gefahrenbereichsüberwachung weist die Überwachungsvorrichtung 1 mehrere Sensoren auf. Die Sensoren können prinzipiell von Radarsensoren und dergleichen ausgebildet sein. Im vorliegenden Fall sind die Sensoren als optische Sensoren ausgebildet, und zwar als Flächendistanzsensoren 9 und Lichtvorhänge 10 beziehungsweise Lichtschranken 10a, 10b.

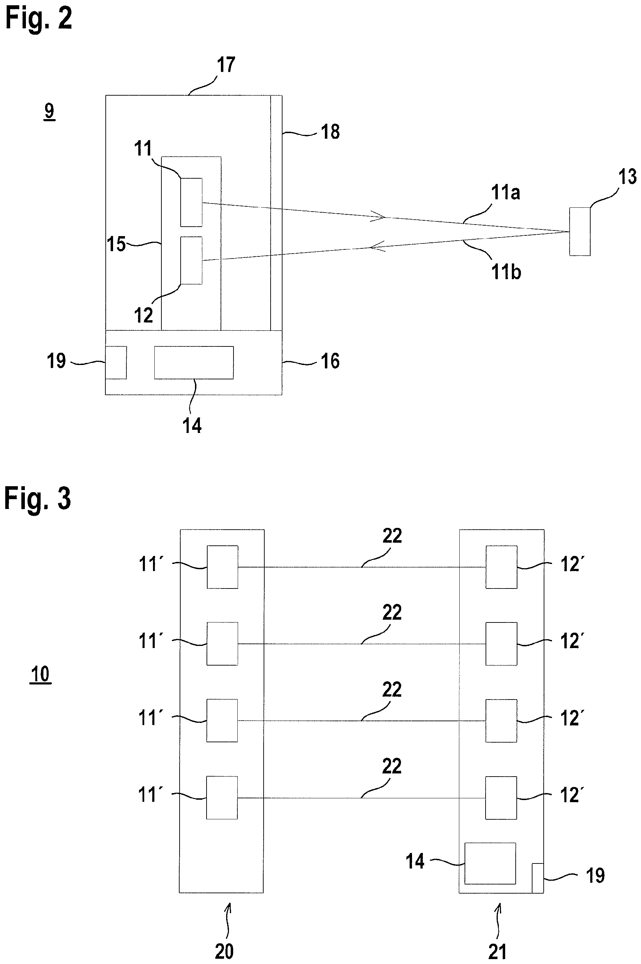

Figur 2 zeigt ein Ausführungsbeispiel eines Flächendistanzsensors 9. Der dort dargestellte Flächendistanzsensor 9 weist einen Sendelichtstrahlen 11a emittierenden Sender 11 und einen Empfangslichtstrahlen 11b empfangenden Empfänger 12 auf, die einen nach einem Impuls-Laufzeit-Verfahren arbeitenden Distanzsensor ausbilden. Zur Distanzbestimmung eines Objekts 13 wird in einer Auswerteeinheit 14 die Laufzeit der Sendelichtstrahlen 11a vom Sender 11 zum Objekt 13 und zurück zum Empfänger 12 bestimmt und in einen Distanzwert umgerechnet. Der Sender 11 und Empfänger 12 sind in einem rotierenden Messkopf 15 angeordnet. Dieser sitzt auf einem stationären Sockel 16 auf, in dem die Auswerteeinheit 14 untergebracht ist. Der motorisch angetriebene Messkopf 15 dreht sich um eine vertikale Drehachse (bezogen auf die Darstellung gemäß Figur 2). Diese Sensorkomponenten sind in einem auf dem Sockel 16 gelagerten Gehäuse 17 angeordnet. Die Sendelichtstrahlen 11a beziehungsweise Empfangslichtstrahlen 11b werden durch ein Fenster 18 im Gehäuse 17 geführt. An die Auswerteeinheit 14 ist ein Schaltausgang 19 für eine Signalausgabe angeschlossen.

Durch die Drehbewegung des Messkopfs 15 werden die Sendelichtstrahlen 11a in einem in einer horizontalen Ebene liegenden Abtastbereich periodisch abgelenkt.

Der Winkelbereich des Abtastbereichs ergibt sich durch die Ausdehnung des Fensters 18 in Umfangsrichtung des Gehäuses 17.

Durch die fortlaufenden Distanzmessungen und Bestimmung der aktuellen Winkelpositionen der Sendelichtstrahlen 11a kann eine Positionsbestimmung von Objekten 13 im Abtastbereich durchgeführt werden.

Für den Einsatz im Bereich der Sicherheitstechnik weist die Auswerteeinheit 14 einen redundanten Aufbau in Form zweier sich zyklisch überwachenden Rechnereinheiten auf.

Figur 3 zeigt einen optischen Sensor in Form eines Lichtvorhangs 10, mittels dessen ein flächiger Überwachungsbereich überwacht wird. Der Lichtvorhang 10 weist eine Sendereinheit 20 und eine Empfängereinheit 21 auf, deren Komponenten jeweils in einem Gehäuse integriert sind und die an gegenüberliegenden Rändern des Überwachungsbereichs angeordnet sind.

In der Sendereinheit 20 befindet sich eine Reihenanordnung von Lichtstrahlen 22 emittierenden Sendern 11', in der Empfängereinheit 21 befindet sich eine entsprechende Anzahl von Empfängern 12`. Jeweils ein Sender 11'und ein gegenüberliegender Empfänger 12' bilden eine Strahlachse. Die Strahlachsen werden durch eine nicht dargestellte Sendersteuerung und eine optische Synchronisierung zyklisch einzeln nacheinander aktiviert. Die Objektdetektion erfolgt nach dem Lichtschrankenprinzip. In der Auswerteeinheit 14 erfolgt hierzu eine Schwellwertberechnung der Empfangssignale der Empfänger 12' zur Generierung eines binären Schaltsignals. In der Auswerteeinheit 14 wird ein Schaltsignal mit dem Schaltzustand "freier Überwachungsbereich" generiert, falls die Lichtstrahlen 22 aller Strahlachsen ungehindert auf den jeweiligen Empfänger 12 ` treffen. Wird wenigstens eine Strahlachse durch einen Objekteingriff unterbrochen, wird in der Auswerteeinheit 14 ein Schaltsignal mit dem Schaltzustand "Objekt vorhanden" generiert. Die Auswerteeinheit 14 weist einen redundanten Aufbau auf. Das Schaltsignal wird über einen Schaltausgang 19 ausgegeben.

Bei der Überwachungsvorrichtung 1 gemäß Figur 1 sind folgende Sensoren für eine Gefahrenbereichsüberwachung vorgesehen. An der Rückwand 5 der Zelle 4 ist ein erster Flächendistanzsensor 9a vorgesehen, mit dem der Innenraum der Zelle 4 überwacht werden kann. An den den Eingang begrenzenden Rändern der Seitenwände 6, 7 befinden sich zwei weitere Flächendistanzsensoren 9b, 9c, mittels derer das Vorfeld der Zelle 4 überwacht werden kann.

An der Rückwand 5 der Zelle 4 befindet sich eine Sendereinheit 20a, die mit einer Empfängereinheit 21a an der Frontseite des fahrerlosen Transportsystems 8 eine erste Lichtschranke 10a ausbildet, das heißt die Sendereinheit 20a umfasst nur einen Sender und die Empfängereinheit 21a umfasst nur einen Empfänger. An der Rückwand 5 der Zelle 4 befindet sich weiterhin eine Empfängereinheit 21b, die mit einer Sendereinheit 20b an der Frontseite eine weitere Lichtschranke 10b ausbildet. An den den Eingang begrenzenden Rändern der Zelle 4 befinden sich eine Sendereinheit 20c und eine Empfängereinheit 21c eines Lichtvorhangs 10c.

An der Frontseite des fahrerlosen Transportsystems 8 befindet sich ein weiterer Flächendistanzsensor 9d zur Vorfeldüberwachung des fahrerlosen Transportsystems 8. An der Rückseite des fahrerlosen Transportsystems 8 befindet sich ein weiterer Flächendistanzsensor 9e zur Rückraumüberwachung des fahrerlosen Transportsystems 8.

Im fahrerlosen Transportsystem 8 ist eine erste Steuereinheit 23 integriert, welche den Sensoren des fahrerlosen Transportsystems 8 zugeordnet ist und welche zur Steuerung des Fahrzeugs dient. Optional ist auch den Sensoren der Roboterzelle 2 eine weitere Steuereinheit 24 zugeordnet.

In jeder Steuereinheit 23, 24 sowie in jedem Flächendistanzsensor 9a - 9e und in jeder Sendereinheit 20a, 20b, 20c und Empfängereinheit 21a, 21b, 21c des Lichtvorhangs 10c und den Lichtschranken 10a, 10b ist ein nicht gesondert dargestelltes Kommunikationsmodul zur berührungslosen bidirektionalen Datenübertragung vorgesehen.

Die Kommunikationsmodule bilden eine Kommunikationseinrichtung über welche bidirektional Informationen ausgetauscht werden können. Im vorliegenden Fall ist eine berührungslos arbeitende Kommunikationseinrichtung vorgesehen, wobei die Informationen zwischen den Kommunikationsmodulen als Funksignale übertragen werden. Dementsprechend weist jedes Kommunikationsmodul einen Funksender und einen Funkempfänger auf.

Alternativ können leitungsgebundene Datenübertragungen vorgesehen sein.

Die Überwachungsvorrichtung 1 wird im Bereich der Sicherheitstechnik eingesetzt. Hierzu sind deren Komponenten, insbesondere die Steuereinheiten 23, 24 die Kommunikationseinrichtung und die Sensoren als sicherheitsgerichtete Einheiten ausgebildet. Die Steuereinheiten 23, 24 können hierzu aus zwei sich zyklisch überwachenden Rechnereinheiten bestehen. Die Datenübertragung über die Kommunikationseinrichtung kann durch Prüfsummen abgesichert sein.

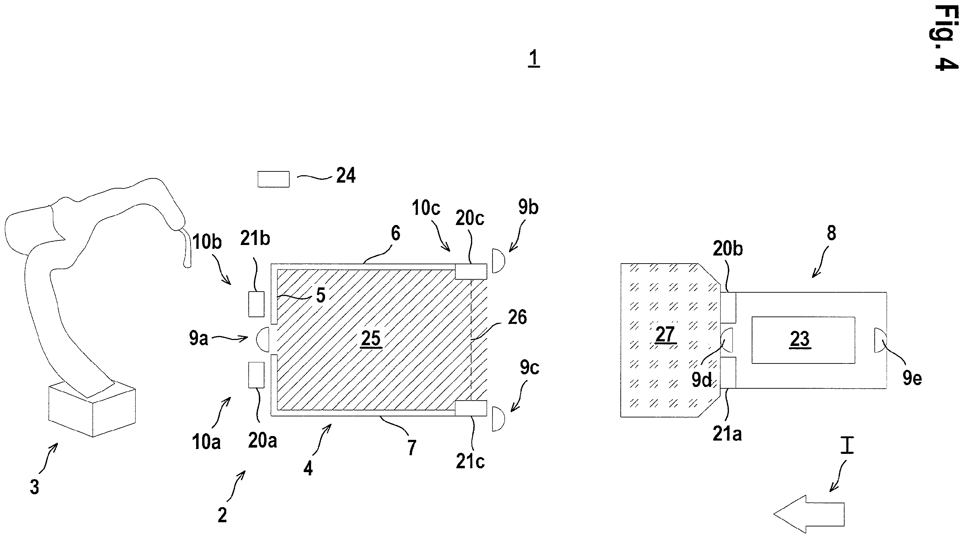

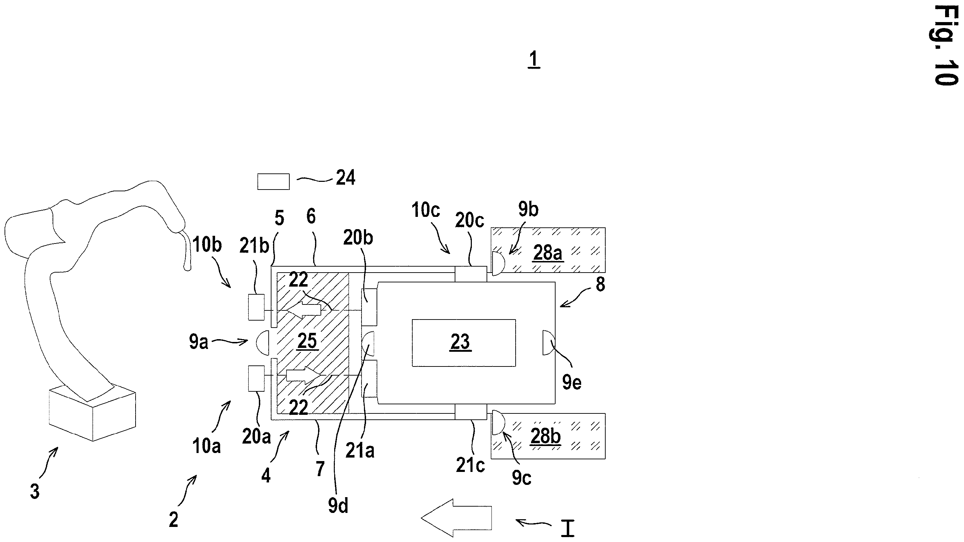

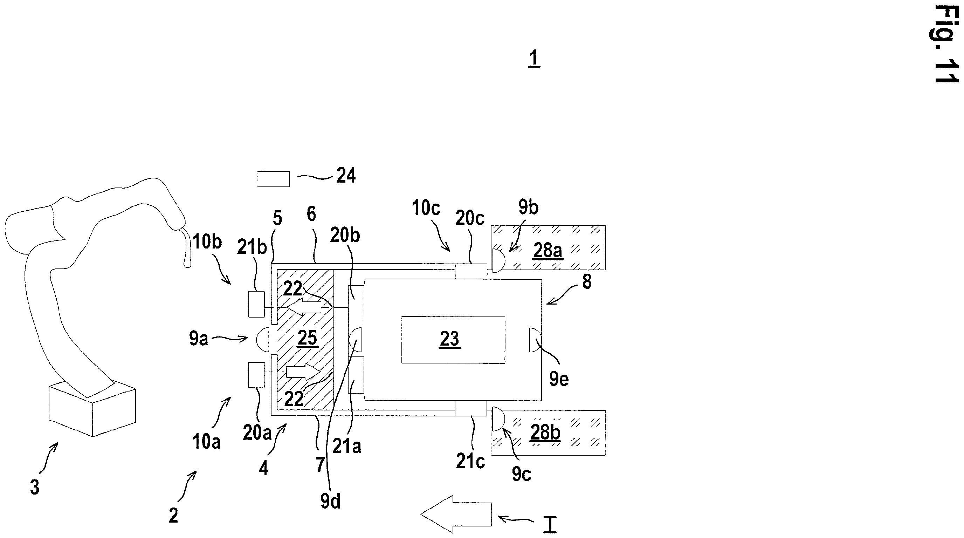

Die Funktionsweise der erfindungsgemäßen Überwachungsvorrichtung 1 wird im Folgenden anhand der Figuren 4 bis 18 erläutert.

Die Figuren 4 bis 18 zeigen insbesondere das Ein- und Ausfahren des fahrerlosen Transportsystems 8 in die beziehungsweise aus der Roboterzelle 2. Dieser Prozess wird fortlaufend durch die Schutzfeldüberwachung mit den Sensoren an der Roboterzelle 2 und an dem fahrerlosen Transportsystem 8 kontrolliert. Dabei erfolgt fortlaufend eine Anpassung der für die Schutzfeldüberwachung benötigten Schutzfelder 25 - 29 an die aktuelle Position des fahrerlosen Transportsystems 8. Die Anpassung der Schutzfeldüberwachung erfolgt durch die erfindungsgemäße Inter-Sensor-Kommunikation, in welche die Steuereinheiten 23, 24 miteinbezogen sind.

Figur 4 zeigt die Situation, wenn sich das fahrerlose Transportsystem 8 in größerer Distanz zur Roboterzelle 2 befindet und sich auf diese zubewegt (wie mit dem Pfeil I veranschaulicht).

Mit dem Flächendistanzsensor 9a an der Rückwand 5 der Zelle 4 wird überwacht, dass sich dort kein Objekt 13 oder keine Person aufhält. Hierzu erfolgt mit dem Flächendistanzsensor 9a eine Überwachung eines Schutzfeldes 25, das den Innenraum der Zelle 4 abdeckt. Das Schutzfeld 25 verläuft, wie die Schutzfelder 26 - 29 aller anderen Flächendistanzsensoren 9a - 9e, in einer horizontalen Ebene, das heißt parallel zur Fahrbahn des fahrerlosen Transportsystems 8. Mit dem Lichtvorhang 10c wird innerhalb eines Schutzfeldes 26 überwacht, ob ein Objekt 13 oder eine Person in die Zelle 4 eindringt. Das Schutzfeld 26 des Lichtvorhangs 10c verläuft in einer senkrechten Ebene. Mit dem Flächendistanzsensor 9d an der Frontseite des fahrerlosen Transportsystems 8 wird innerhalb eines Schutzfeldes 27 das Vorfeld des fahrerlosen Transportsystems 8 überwacht.

Figur 4 zeigt den fehlerfreien Zustand der Anordnung, das heißt es befindet sich kein Objekt 13 in den Schutzfeldern 25, 26, 27. Damit können beispielsweise über die Steuereinheit 24 Arbeitsbewegungen des Roboters 3 freigegeben sein. Weiterhin kann sich das fahrerlose Transportsystem 8 mit Sollgeschwindigkeit bewegen.

Würde ein Objekteingriff im Schutzfeld 25 oder Schutzfeld 26 registriert, wird der Roboter 3 angehalten. Zudem wird von der Steuereinheit 24 oder einer der Sensoren der Roboterzelle 2 an die Steuereinheit 23 des fahrerlosen Transportsystems 8 ein Signal gesendet, dass die Einfahrt in die Zelle 4 nicht freigegeben ist. Die Aussendung dieses Signals ist optional.

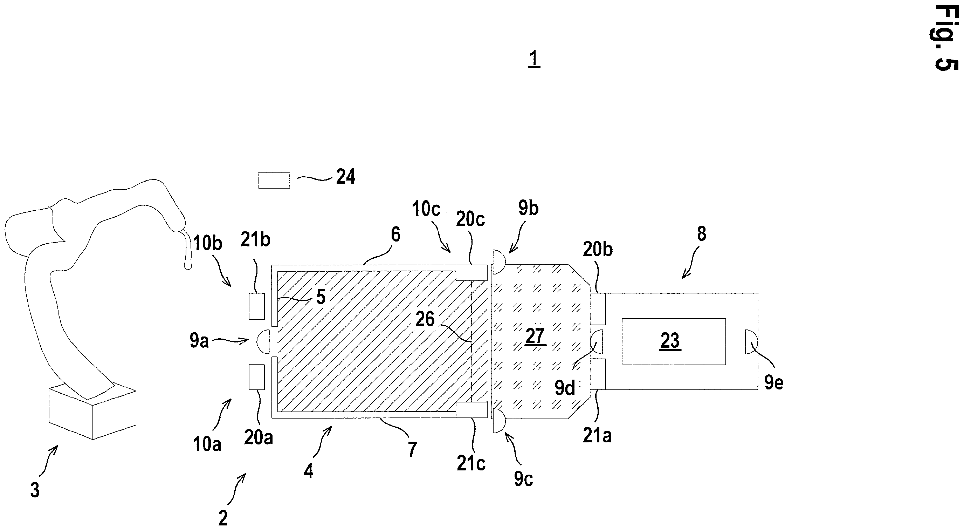

Figur 5 zeigt das fahrerlose Transportsystem 8 nach Annäherung an die Roboterzelle 2, sodass die Flächendistanzsensoren 8 an. Ein Anhalten des fahrenlosen Transportsystems 8 erfolgt natürlich auch dann, wenn andere Gegenstände in das Schutzfeld 27 ragen.

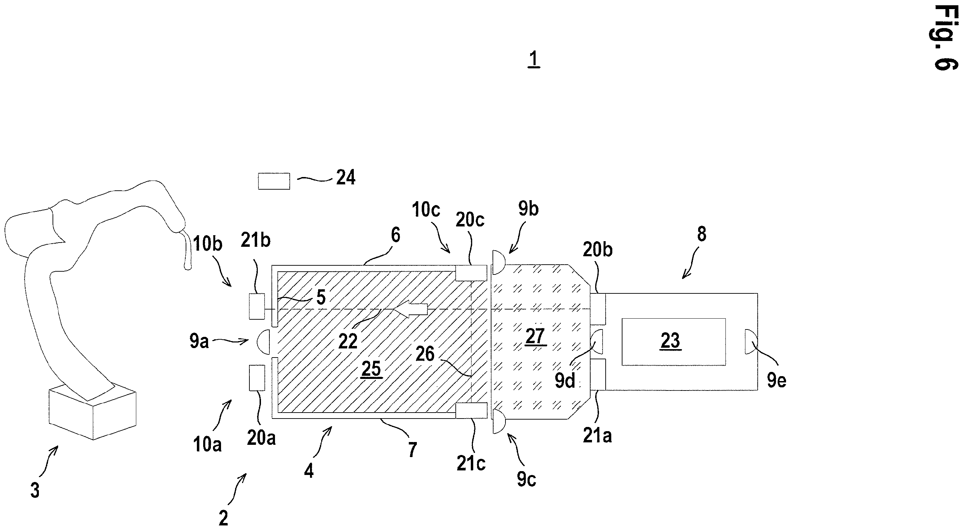

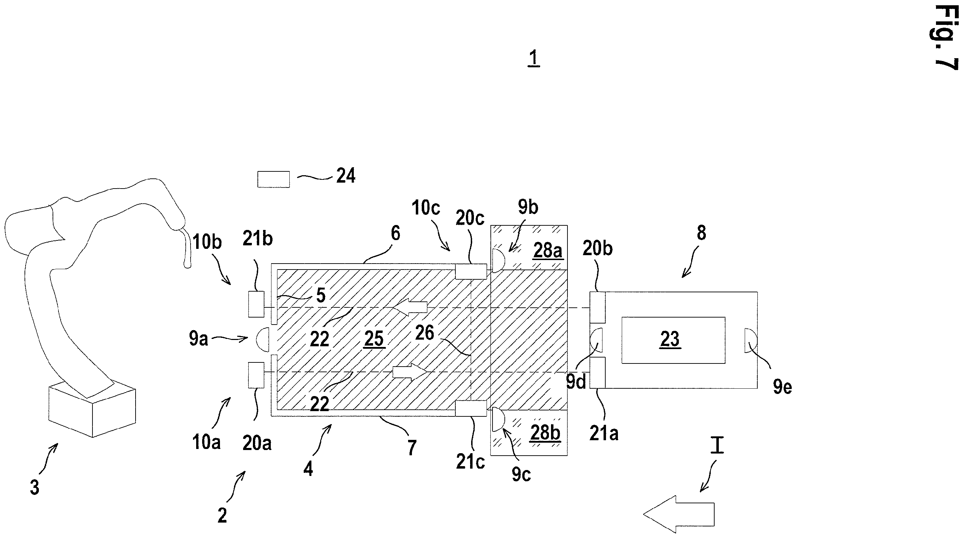

Dann sendet das fahrerlose Transportsystem 8 eine Anforderung für die Einfahrt in Zelle 4. Wie Figur 6 zeigt, sendet hierzu die Sendereinheit 20b der Lichtschranke 10b seine Lichtstrahlen 22 an die Empfängereinheit 21b der Zelle 4 an der Rückwand 5. Sobald die Empfängereinheit 21b die Lichtstrahlen 22 empfangen hat, sendet sie eine entsprechende Information an die Sendereinheit 20a der Lichtschranke 10a, die dann seine Lichtstrahlen 22 an die Empfängereinheit 21a dieser Lichtschranke 10a am fahrerlosen Transportsystem 8 sendet (Figur 7). Durch dieses Quittungssignal wird die Einfahrt des fahrerlosen Transportsystems 8 in die Zelle 4 freigegeben. Alternativ kann die Kommunikation auch direkt über die Steuereinheit 23 erfolgen.

Für die Einfahrt des fahrerlosen Transportsystems 8 wird, wie Figur 7 zeigt, mit dem Flächendistanzsensor 9a ein vergrößertes Schutzfeld 25 überwacht, das bis vor das fahrerlose Transportsystem 8 reicht. Die Anpassung des Schutzfeldes 25 erfolgt selbsttätig durch die Inter-Sensor-Kommunikation. Dafür wird das Schutzfeld 27 des Flächendistanzsensors 9d deaktiviert. Für einen Schutz gegen ein seitliches Eindringen von Objekten 13 während der Einfahrt des fahrerlosen Transportsystems 8 werden mit den Flächendistanzsensoren 9b, 9c die Schutzfelder 28a, 28b überwacht.

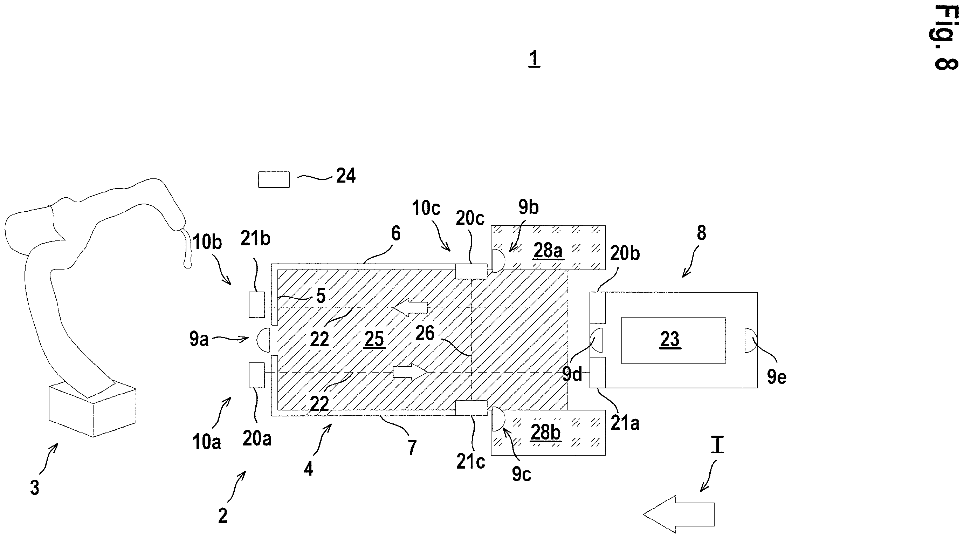

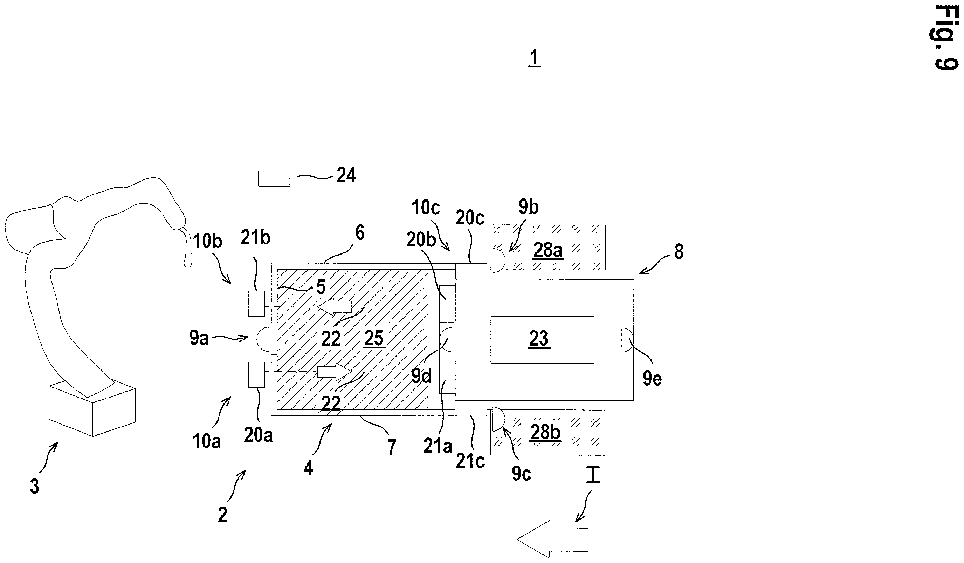

Bei weiterem Einfahren wird das Schutzfeld 25 laufend verkleinert und an die aktuelle Position des fahrerlosen Transportsystems 8 angepasst, wie die Figuren 8 bis 11 zeigen. Sobald das fahrerlose Transportsystem 8 in die Zelle 4 eindringt, wird das Schutzfeld 26 des Lichtvorhangs 10c unterbrochen (Figuren 9 bis 11). Während des Einfahrens gelangen die Lichtstrahlen 22 der Sendereinheit 20a zur Empfängereinheit 21a der Lichtschranke 10a und die Lichtstrahlen 22 der Sendereinheit 20b zur Empfängereinheit 21b der Lichtschranke 10b. Dadurch wird das korrekte Einfahren des fahrerlosen Transportsystems 8 kontrolliert.

Da während dieses Einfahrvorgangs in den Schutzfeldern 25, 28a, 28b kein Objekteingriff erfolgt, kann der Roboter 3 seine Arbeitsprozesse fortsetzen.

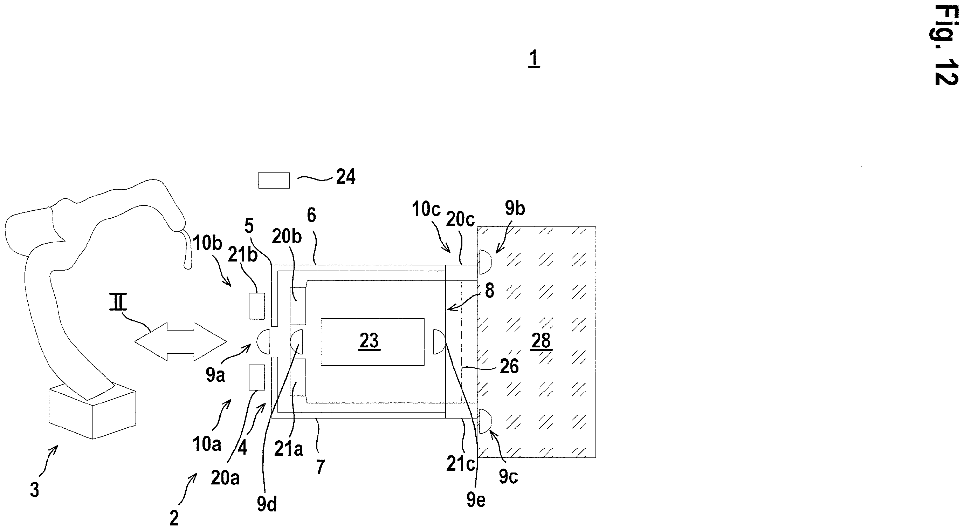

Figur 12 zeigt das fahrerlose Transportsystem 8, wenn es in seine Sollposition in der Zelle 4 eingefahren ist. Die Sollposition wird dadurch erkannt, dass das Schutzfeld 26 des Lichtvorhangs 10c nun frei ist. Darauf werden die Lichtschranken 10a, 10b deaktiviert. Mit den Flächendistanzsensoren 9b, 9c, 9e wird nun ein gemeinsames Schutzfeld 28 überwacht, welches das Vorfeld der Zelle 4 umfasst. Damit wird der Zutritt zur Zelle 4 überwacht. Wenn sich das fahrerlose Transportsystem 8 in der Sollposition befindet, kann der Roboter 3 Lade- beziehungsweise Entladevorgänge am fahrerlosen Transportsystem 8 durchführen, wie mit dem Doppelpfeil II veranschaulicht.

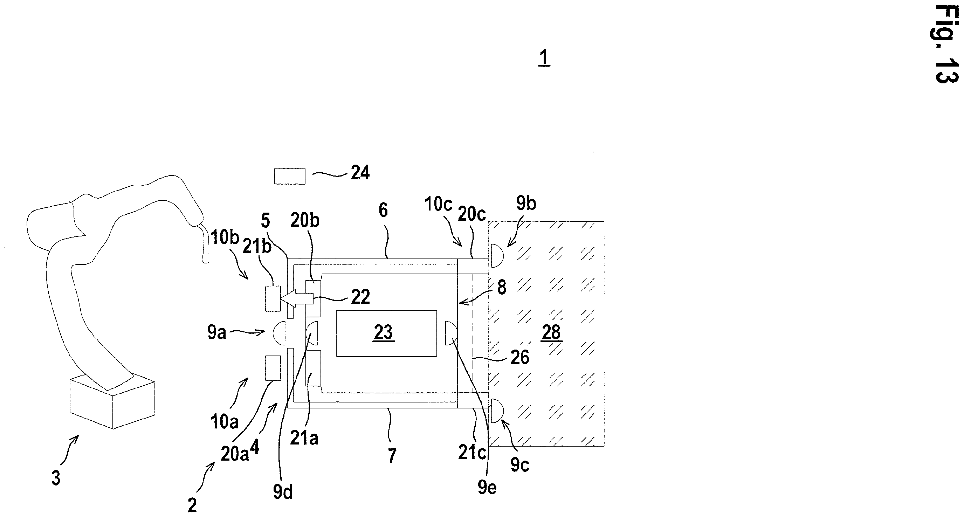

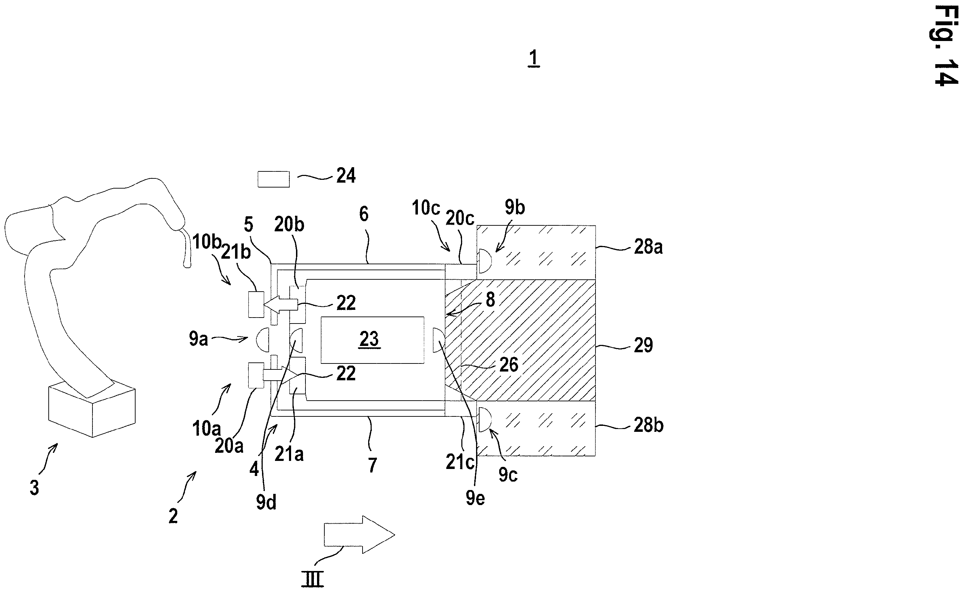

Nach Beenden der Lade- beziehungsweise Entladevorgänge sendet die Sendereinheit 20b der Lichtschranke 10b Lichtstrahlen 22 an die Empfängereinheit 21b als Anforderung für ein Ausfahren des fahrerlosen Transportsystems 8 aus der Zelle 4 (Figur 13). Als Quittung sendet die Sendereinheit 20a der Lichtschranke 10a Lichtstrahlen 22 an die Empfängereinheit 21a. Sobald diese empfangen werden, wird mit dem Flächendistanzsensor 9e ein Schutzfeld 29 aktiviert, mit dem der Rückraum des fahrerlosen Transportsystems 8 überwacht wird. Dann wird die Ausfahrt des fahrerlosen Transportsystems 8 freigegeben und dieses bewegt sich in Richtung des Pfeiles III aus der Zelle 4 heraus. Zur seitlichen Überwachung werden für die Flächendistanzsensoren 9b, 9c wieder die Schutzfelder 28a, 28b aktiviert (Figur 14).

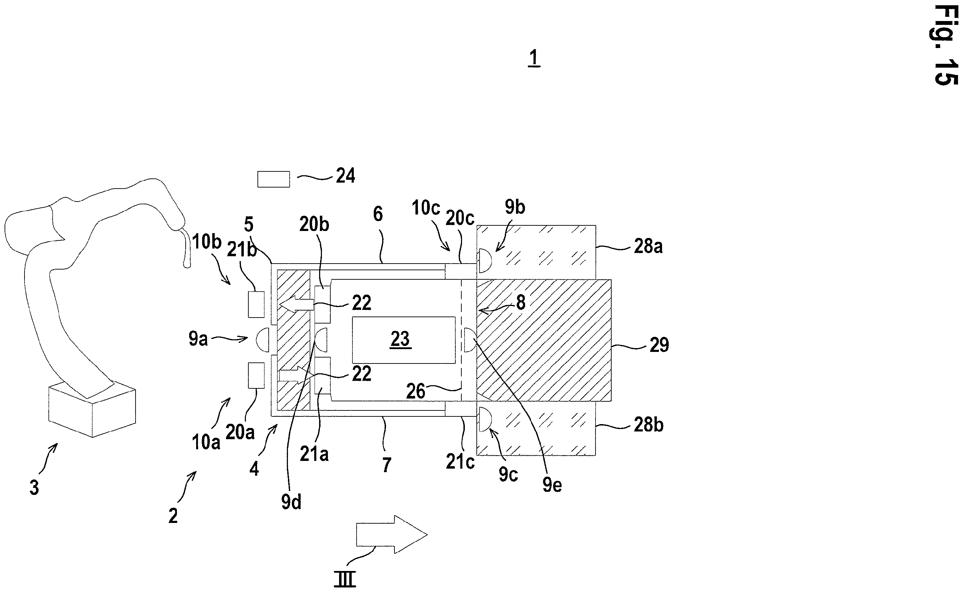

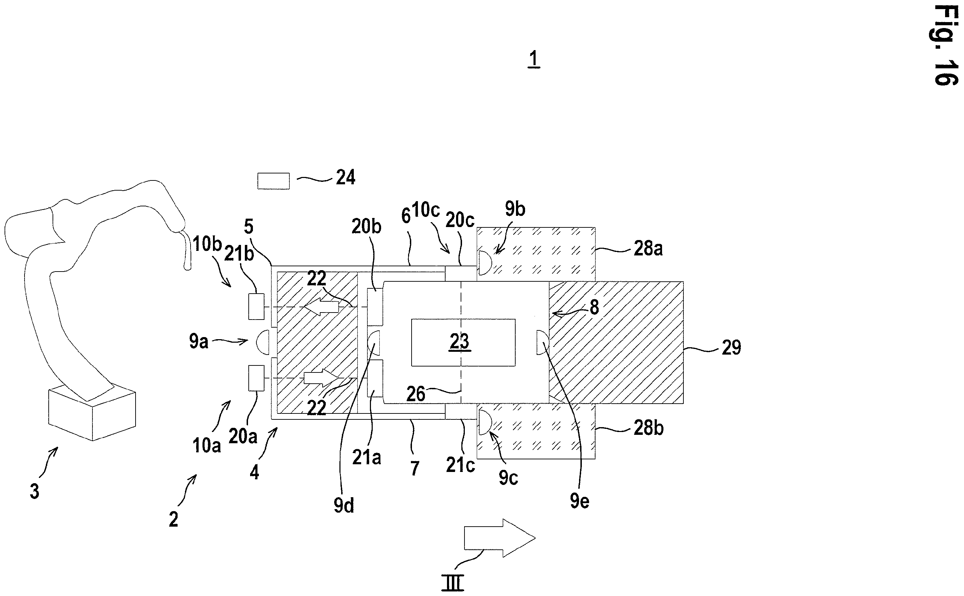

Die Ausfahrt des fahrerlosen Transportsystems 8 aus der Zelle 4 erfolgt dann umgekehrt zur Einfahrt mit entsprechend angepasster Schutzfeldüberwachung, wie die Figuren 15, 16 zeigen. Während der Ausfahrt ist das Schutzfeld 26 des Lichtvorhangs 10c unterbrochen.

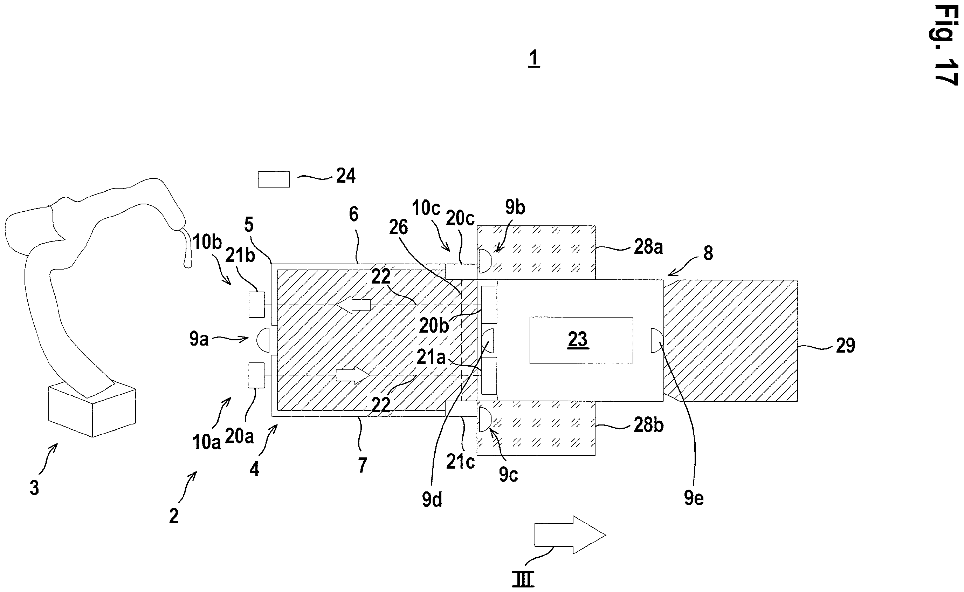

Sobald das fahrerlose Transportsystem 8 die Zelle 4 verlassen hat, ist das Schutzfeld 26 wieder frei (Figur 17).

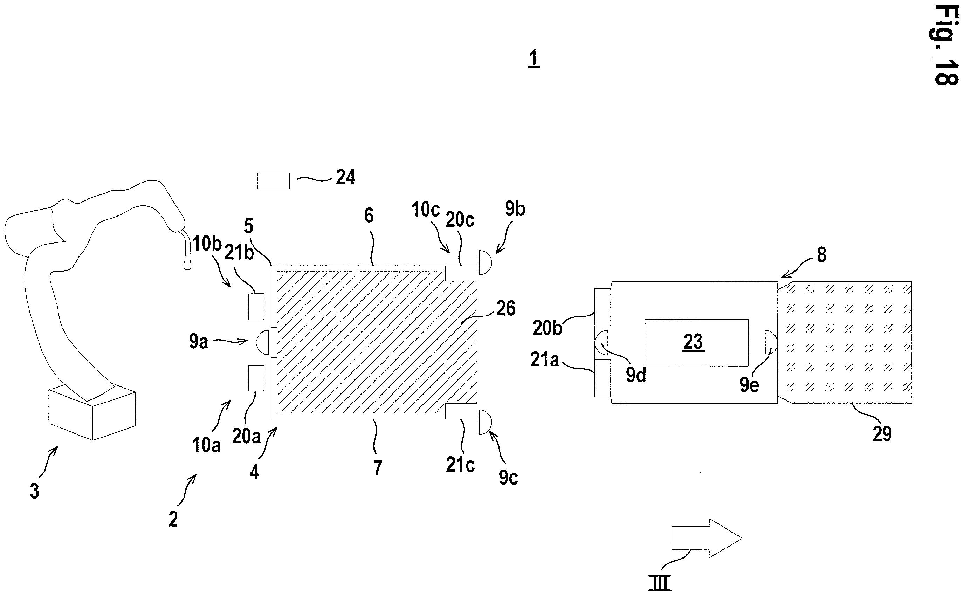

Sobald das fahrerlose Transportsystem 8 außer Reichweite der Lichtschranken 10a, 10b ist, werden die Schutzfelder 28a, 28b der Flächendistanzsensoren 9b, 9c deaktiviert und mit dem Flächendistanzsensor 9a wird wieder der Innenraum der Zelle 4 überwacht. Mit dem Lichtvorhang 10c wird wieder überwacht, ob ein Objekt 13 oder eine Person in den Innenraum der Zelle 4 eindringt (Figur 18).

Hinsichtlich des gezeigten Ausführungsbeispiels sind natürlich unterschiedliche Varianten möglich.

So kann zum Beispiel der Roboter 3 so programmiert sein, dass er nur in den Bereich über dem Schutzfeld 25 eingreift, wenn das fahrerlose Transportsystem 8 in die Endposition gemäß Figur 13 eingefahren ist. In diesem Fall braucht der Roboter 3 keine Meldung erhalten und muss nicht angehalten werden.

Gemäß einer weiteren Variante erhält der Roboter 3 Meldungen über Verletzungen der Schutzfelder 25, 26 und wird nur dann angehalten oder auf eine für Kollision mit Personen ungefährliche Geschwindigkeit abgebremst, wenn sich eines seiner Teile über dem oder im Schutzfeld 25 befindet oder in diesen Bereich hineinbewegen möchte. Ansonsten kann der Roboter 3 seine Bewegung fortsetzen.

Gemäß einer weiteren Variante ist das Schutzfeld 27 vor dem fahrerlosen Transportsystem 8 so konfiguriert, dass mit diesem der Bereich vor dem fahrerlosen Transportsystem 8 während einer Fahrt abgesichert wird, solange das Schutzfeld 27 außerhalb des Schutzfeldes 25 liegt.

Dann benötigt das fahrerlose Transportsystem 8 ein Signal bei Verletzung des Schutzfeldes 25 nur in seiner Halteposition (Figur 13), nicht während der Fahrt.

Alternativ erhält das fahrerlose Transportsystem 8 das Signal bei Verletzung des Schutzfeldes 25 auch außerhalb der Halteposition. Die Steuereinheit 23 kann dann nach einem internen positionsabhängigen Regelwerk entscheiden, ob das fahrerlose Transportsystem 8 anhält oder bis zur Halteposition weiterfährt.

### Bezugszeichenliste

- (1): Überwachungsvorrichtung
- (2): Roboterzelle
- (3): Roboter
- (4): Zelle
- (5): Rückwand
- (6): Seitenwand
- (7): Seitenwand
- (8): Fahrerloses Transportsystem
- (9): Flächendistanzsensor
- (9a - e): Flächendistanzsensor
- (10): Lichtvorhang
- (10a, b): Lichtschranke
- (10c): Lichtvorhang
- (11, 11'): Sender
- (11a): Sendelichtstrahlen
- (11b): Empfangslichtstrahlen
- (12, 12'): Empfänger
- (13): Objekt
- (14): Auswerteeinheit
- (15): Messkopf
- (16): Sockel
- (17): Gehäuse
- (18): Fenster
- (19): Schaltausgang
- (20): Sendereinheit
- (20a - c): Sendereinheit
- (21): Empfängereinheit
- (21a - c): Empfängereinheit
- (22): Lichtstrahlen
- (23, 24): Steuereinheit
- (25 - 28): Schutzfeld
- (28a - b): Schutzfeld
- (29): Schutzfeld

- I: Pfeil
- II: Doppelpfeil
- III: Pfeil

## Patentansprüche

1. Überwachungsvorrichtung (1) mit Sensoren an einer stationären Einrichtung und mit Sensoren an einer mobilen Einrichtung, wobei zumindest ein Teil der Sensoren für eine Kommunikation zwischen der stationären Einrichtung und der mobilen Einrichtung ausgebildet ist, und in Abhängigkeit von Sensorsignalen Überwachungsfunktionalitäten ereignisgesteuert vorgegeben sind, **dadurch gekennzeichnet, dass** Sensoren Kommunikationsmodule zugeordnet sind, über welche Informationen zur Vorgabe von Überwachungsfunktionalitäten übertragbar sind, dass über Kommunikationsmodule Sensoren direkt Informationen austauschen, dass die stationäre Einrichtung und/oder die mobile Einrichtung eine Steuereinheit (23, 24) mit einem zugeordneten Kommunikationsmodul zum Austausch von Informationen untereinander und/oder mit Sensoren aufweist, wobei in Sensoren generierte Überwachungssignale zur Inter-Sensor-Kommunikation genutzt werden, und wobei auf der stationären Einrichtung und der mobilen Einrichtung jeweils eine Sensoreinheit eines Sensors angeordnet ist, zwischen welchen Überwachungssignale übertragen werden, welche zur Inter-Sensor-Kommunikation genutzt werden.

2. Überwachungsvorrichtung (1) nach Anspruch 1, **dadurch gekennzeichnet, dass** mit dieser eine ereignisgesteuerte Gefahrenbereichsüberwachung durchführbar ist.

3. Überwachungsvorrichtung (1) nach einem der Ansprüche 1 oder 2, **dadurch gekennzeichnet, dass** Sensoren für eine Schutzfeldüberwachung ausgebildet sind.

4. Überwachungsvorrichtung (1) nach Anspruch 3, **dadurch gekennzeichnet, dass** ereignisgesteuert unterschiedliche Schutzfelder (25 - 29) für Sensoren vorgegeben sind.

5. Überwachungsvorrichtung (1) nach einem der Ansprüche 3 oder 4, **dadurch gekennzeichnet, dass** die Schutzfelder (25 - 29) ein-, zwei- oder dreidimensionale Bereiche sind.

6. Überwachungsvorrichtung (1) nach einem der Ansprüche 1 bis 5, **dadurch gekennzeichnet, dass** die oder jede Steuereinheit (23, 24) als Sicherheitssteuerung und der oder jeder Sensor als Sicherheitssensor ausgebildet sind.

7. Überwachungsvorrichtung (1) nach einem der Ansprüche 1 bis 6, **dadurch gekennzeichnet, dass** wenigstens ein Sensor ein optischer Sensor oder ein Radarsensor ist, welcher zur Erfassung von Objekten (13) innerhalb zwei- und/oder dreidimensionaler Schutzfelder (25 - 29) ausgebildet ist.

8. Überwachungsvorrichtung (1) nach Anspruch 7, **dadurch gekennzeichnet, dass** wenigstens ein optischer Sensor ein Flächendistanzsensor, ein Distanzsensor oder ein Kamera-Sensor ist.

9. Überwachungsvorrichtung (1) nach einem der Ansprüche 7 oder 8, **dadurch gekennzeichnet, dass** wenigstens ein Sensor ein Lichtvorhang (10, 10c) oder eine Lichtschranke (10a, 10b) ist.

10. Überwachungsvorrichtung (1) nach einem der Ansprüche 1 bis 9, **dadurch gekennzeichnet, dass** die stationäre Einrichtung eine Maschine, eine Anlage oder eine Roboterzelle (2) ist.

11. Überwachungsvorrichtung (1) nach einem der Ansprüche 1 bis 10, **dadurch gekennzeichnet, dass** die mobile Einrichtung ein Fahrzeug ist.

12. Überwachungsvorrichtung (1) nach Anspruch 11, **dadurch gekennzeichnet, dass** das Fahrzeug als autonomes Fahrzeug ausgebildet ist.

13. Überwachungsvorrichtung (1) nach einem der Ansprüche 1 bis 12, **dadurch gekennzeichnet, dass** die Kommunikationsmodule leitungsgebundene oder berührungslos arbeitende Kommunikationseinrichtungen ausbilden.

## Claims

1. A monitoring device (1) having sensors on a stationary device and having sensors on a mobile device, at least some of the sensors being designed for communication between the stationary device and the mobile device, and monitoring functionalities being specified in an event-controlled manner as a function of sensor signals, **characterised in that** sensors are assigned communication modules via which information for specifying monitoring functionalities can be transmitted, **in that** sensors exchange information directly via communication modules, and **in that** the stationary device and/or the mobile device have a control unit (23, 24) with an assigned communication module for exchanging information with one another and/or with sensors, **in that** the stationary device and/or the mobile device has a control unit (23, 24) with an associated communication module for exchanging information with one another and/or with sensors, monitoring signals generated in sensors being used for inter-sensor communication, and a sensor unit of a sensor being arranged in each case on the stationary device and the mobile device, between which monitoring signals are transmitted which are used for inter-sensor communication.

2. A monitoring device (1) according to claim 1, **characterised in that** event-controlled danger zone monitoring can be carried out with this device.

3. A monitoring device (1) according to one of claims 1 or 2, **characterised in that** sensors are designed for protective field monitoring.

4. A monitoring device (1) according to claim 3, **characterised in that** different protective fields (25 - 29) for sensors are predetermined in an event-controlled manner.

5. A monitoring device (1) according to one of claims 3 or 4, **characterised in that** the protective fields (25 - 29) are one-, two- or three-dimensional areas.

6. A monitoring device (1) according to one of claims 1 to 5, **characterised in that** the or each control unit (23, 24) is designed as a safety control and the or each sensor is designed as a safety sensor.

7. A monitoring device (1) according to one of claims 1 to 6, **characterised in that** at least one sensor is an optical sensor or a radar sensor which is designed to detect objects (13) within two- and/or three-dimensional protective fields (25 - 29).

8. A monitoring device (1) according to claim 7, **characterised in that** at least one optical sensor is a surface distance sensor, a distance sensor or a camera sensor.

9. A monitoring device (1) according to one of claims 7 or 8, **characterised in that** at least one sensor is a light curtain (10, 10c) or a light barrier (10a, 10b).

10. A monitoring device (1) according to any one of claims 1 to 9, **characterised in that** the stationary device is a machine, a plant or a robot cell (2).

11. A monitoring device (1) according to any one of claims 1 to 10, **characterised in that** the mobile device is a vehicle.

12. A monitoring device (1) according to claim 11, **characterised in that** the vehicle is designed as an autonomous vehicle.

13. A monitoring device (1) according to one of the claims 1 to 12, **characterised in that** the communication modules form communication devices which are connected by lines or operate without contact.

## Revendications

1. Dispositif de surveillance (1) comportant des capteurs sur un dispositif fixe et des capteurs sur un dispositif mobile, au moins certains des capteurs étant conçus pour la communication entre le dispositif fixe et le dispositif mobile, et les fonctionnalités de surveillance étant spécifiées d'une manière contrôlée par événement en fonction des signaux des capteurs, **caractérisé en ce que** les capteurs se voient attribuer des modules de communication par lesquels les informations pour la spécification des fonctionnalités de surveillance peuvent être transmises, **en ce que** les capteurs échangent des informations directement par l'intermédiaire des modules de communication, et **en ce que** le dispositif fixe et/ou le dispositif mobile ont une unité de commande (23, 24) avec un module de communication assigné pour échanger des informations entre eux et/ou avec les capteurs, **en ce que** le dispositif fixe et/ou le dispositif mobile a une unité de commande (23, 24) avec un module de communication associé pour échanger des informations entre eux et/ou avec les capteurs, les signaux de surveillance générés dans les capteurs étant utilisés pour la communication inter-capteurs, et une unité de capteur d'un capteur étant disposée dans chaque cas sur le dispositif fixe et le dispositif mobile, entre lesquels des signaux de surveillance sont transmis qui sont utilisés pour la communication inter-capteurs.

2. Dispositif de surveillance (1) selon la revendication 1, **caractérisé par le fait qu'**il permet de surveiller les zones dangereuses en fonction des événements.

3. Dispositif de surveillance (1) selon l'une des revendications 1 ou 2, **caractérisé par le fait que** les capteurs sont conçus pour la surveillance du champ de protection.

4. Dispositif de surveillance (1) selon la revendication 3, **caractérisé par le fait que** différents champs de protection (25 - 29) pour les capteurs sont prédéterminés en fonction des événements.

5. Dispositif de surveillance (1) selon l'une des revendications 3 ou 4, **caractérisé par le fait que** les champs de protection (25 - 29) sont des zones unidimensionnelles, bidimensionnelles ou tridimensionnelles.

6. Dispositif de surveillance (1) selon l'une des revendications 1 à 5, **caractérisé par le fait que** chaque unité de commande (23, 24) est conçue comme une commande de sécurité et que chaque capteur est conçu comme un capteur de sécurité.

7. Dispositif de surveillance (1) selon l'une des revendications 1 à 6, **caractérisé par le fait qu'**au moins un capteur est un capteur optique ou un capteur radar conçu pour détecter des objets (13) à l'intérieur de champs de protection bidimensionnels et/ou tridimensionnels (25 - 29).

8. Dispositif de surveillance (1) selon la revendication 7, **caractérisé par le fait qu'**au moins un capteur optique est un capteur de distance de surface, un capteur de distance ou un capteur de caméra.

9. Dispositif de surveillance (1) selon l'une des revendications 7 ou 8, **caractérisé par le fait qu'**au moins un capteur est un rideau lumineux (10, 10c) ou une barrière lumineuse (10a, 10b).

10. Dispositif de surveillance (1) selon l'une des revendications 1 à 9, **caractérisé par le fait que** le dispositif fixe est une machine, une installation ou une cellule robotisée (2).

11. Dispositif de surveillance (1) selon l'une des revendications 1 à 10, **caractérisé par le fait que** le dispositif mobile est un véhicule.

12. Dispositif de surveillance (1) selon la revendication 11, **caractérisé en ce que** le véhicule est conçu comme un véhicule autonome.

13. Dispositif de surveillance (1) selon l'une des revendications 1 à 12, **caractérisé en ce que** les modules de communication forment des dispositifs de communication qui sont connectés par des lignes ou fonctionnent sans contact.
